Europäisches Patentamt

European Patent Office

Office européen des brevets

(19)

(11) **EP 1 394 966 A2**

(12) **EUROPEAN PATENT APPLICATION**

(43) Date of publication:
**03.03.2004 Bulletin 2004/10**

(51) Int Cl.[7]: **H04B 7/08**, H01Q 3/26

(21) Application number: **03255371.1**

(22) Date of filing: **29.08.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **30.08.2002 JP 2002253798**

(71) Applicant: **FUJITSU LIMITED
Kawasaki-shi, Kanagawa 211-8588 (JP)**

(72) Inventors:
• **Nakaya, Yuuta, c/o Fujitsu Limited.
Kawasaki-shi, Kanagawa 211-8588 (JP)**
• **Toda, Takeshi, c/o Fujitsu Limited.
Kawasaki-shi, Kanagawa 211-8588 (JP)**

(74) Representative: **Mohun, Stephen John
Haseltine Lake & Co.,
Imperial House,
15-19 Kingsway
London WC2B 6UD (GB)**

(54) **Radio communication apparatus with beam forming and diversity reception**

(57)     The invention relates to a radio communication apparatus of a base station or a mobile station in a mobile communication system. A radio communication apparatus of the invention has: a channel quality monitoring section (60) for monitoring channel quality of each arriving wave received in parallel via a plurality of array antennas (50-1...50-n); a computing section (54-1...54-n) for calculating, for elements of each of the array antennas (51-11...51-1p; 51-n1...51-np), a set of weights that are such values as to allow each array antenna to function as an adaptive beam forming array antenna; a weight setting section (59) for applying, in common to the array antennas, a particular set of weights which are applied to an array antenna having received an arriving wave with maximum channel quality; and a combining section (58) for combining the arriving waves received with the array antennas to which the particular set of weights are applied.

F I G. 1

## Description

This application is based upon and claims the benefit of priority from the prior Japanese Patent Application No. 2002-253798, filed on August 30, 2002, the entire contents of which are incorporated herein by reference.

The present invention relates to a radio communication apparatus and, in particular, to a transmitter-receiver of a base station or a mobile station in a mobile communication system.

In recent years, highly advanced digital transmission technologies and digital signal processing technologies have been applied to many radio transmission systems and radio applied equipment. In particular, there are strong demands for mobile communication system terminals and other equipment using these technologies to be adaptable to a variety of multimedia and to improve their added values.

It is, accordingly, highly required that antenna systems of such radio transmission systems and radio applied equipment not only have a desired radio transmission path or wireless zone but also be adaptable to a variation in the transmission characteristics of a radio transmission path and secure high channel quality with a low cost. Moreover, weight reduction, miniaturization, power saving, and higher reliability are also required.

The following three techniques are conventional techniques for abating channel quality deterioration by coping with fading and a multipath phenomenon that may occur in such a radio transmission path:

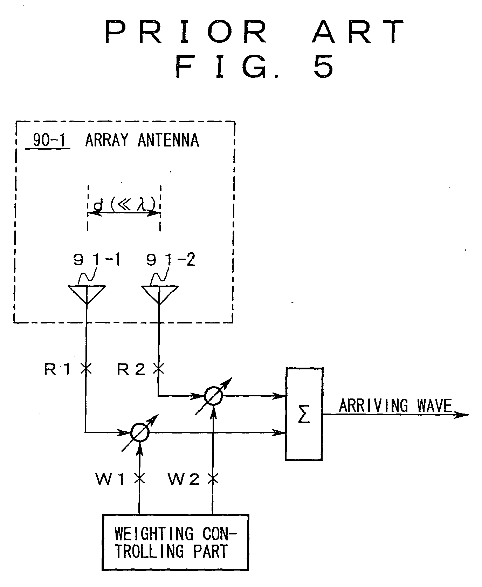

First technique: Maximum SN ratio combining is performed so as to attain a maximum effective SN ratio by generating, as shown in Fig. 5, an arriving wave as a subject of demodulation and a signal judgment as the sum of products of arriving waves R1 and R2 arriving at two elements 91-1 and 91-2. The elements 91-1, 91-2 constitute an array antenna 90 and are arranged at such a short distance d as to produce sufficiently strong spatial correlation and weights W1 and W2, which are generated according to a prescribed algorithm (e.g., an algorithm that attains prescribed digital beam forming).

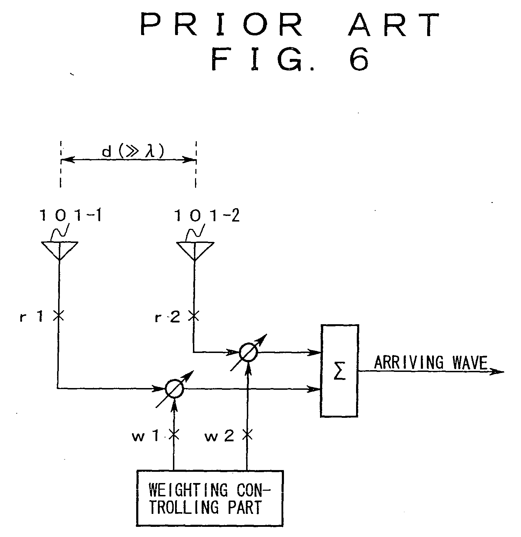

Second technique: Diversity reception is performed by generating, as shown in Fig. 6, an arriving wave as a subject of demodulation and a signal judgment as the sum of products of arriving waves r1 and r2 that are received in parallel via two antennas 101-1 and 101-2. The antennas 101-1, 101-2 are arranged at such a long distance d as to produce sufficiently weak spatial correlation and prescribed weights w1 and w2.

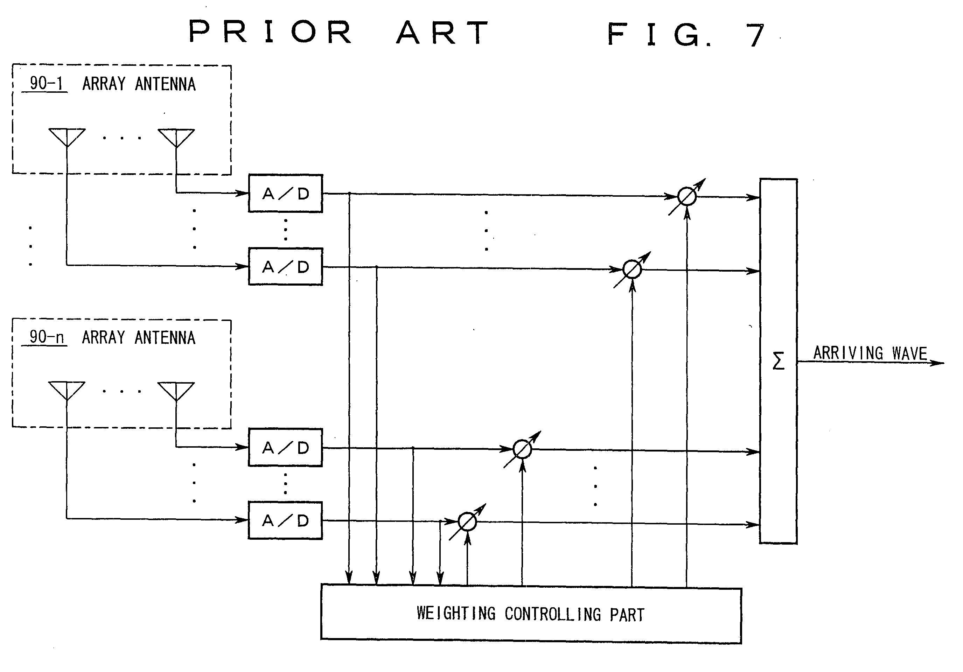

Third technique: An arriving wave as a subject of demodulation and a signal judgment are generated as shown in Fig. 7 as the sum of products of arriving waves that are received via elements of each of a plurality of n array antennas 90-1 to 90-n that are arranged at such a long distance d as to produce sufficiently weak spatial correlation and weights that are generated for the respective elements according to the above-mentioned algorithm. The SN ratio is increased in accordance with the above-mentioned digital beam forming and diversity gain.

Note that in the first technique, even in the case where the arrival direction of a desired arriving wave is unknown or may vary, a null point can be formed in the arrival direction of a disturbing (undesired) wave according to the above-mentioned algorithm. Therefore, the channel quality can be prevented from being degraded greatly even when the DU ratio is very low or is varying largely. However, a variation in the level of an arriving wave is not always sufficiently suppressed because of strong spatial correlation between the elements 91-1 and 91-2.

Using the second technique, it is possible to suppress a variation in the level of an arriving wave with reliability because spatial correlation between the antennas 101-1 and 101-2 is sufficiently weak. However, a main lobe cannot be formed in the arrival direction of a desired arriving wave, and neither can a null point in the arrival direction of a disturbing wave.

Therefore, in a radio transmission system in which complex multipaths are formed, in particular, good channel quality cannot be obtained with stability. In using this technique for transmission, since unintended radiation of a transmission wave occurs via a grating lobe that is formed in a direction in which a receiving end is not located, the technique is not adaptable to a desired zone configuration, channel allocation, and frequency allocation, which makes difficult to use this technique in practice.

In the third technique, a disturbing wave or an interference wave cannot always sufficiently be suppressed when the DU ratio of an arriving wave at one of the array antennas 90-1 to 90-n is very low. Bit errors may occur in the process of judging signals that are obtained by performing diversity combining of such arriving waves.

Embodiments of the present invention aim to provide a radio communication apparatus capable of suppressing an interference wave with reliability, adapting to the configuration and the characteristics of a radio transmission path, and capable of compensating for a variation in the transmission characteristics of the radio transmission path with stability and accuracy. The invention is defined in the attached independent claims, to which reference should now be made. Further, preferred features may be found in the subclaims appended thereto,

Another aim is to attain in parallel suppression of a disturbing (undesired) wave by beam and null forming and diversity reception by combining processing even in the case where the level of an arriving wave or a disturbing wave may vary largely.

Another aim is to reduce processing amount necessary for beam forming.

Another aim is to enable the radio communication apparatus to be adapted to different distances and various arrangements of antennas.

Still another aim is to simplify the configuration of the radio communication apparatus and enhance the responsiveness and the reliability thereof.

Yet another aim is to form a full-duplex radio transmission path of a frequency division scheme with reliability without impairing suppression of a disturbing wave by beam and null forming and diversity reception by combining processing.

A further aim is to enhance the performance, added values, and total reliability of a radio transmission system or a radio applied system to which the invention is applied and to keep a high and stable total reliability.

Embodiments of the invention may provide a radio communication apparatus which applies a particular set of weights in common to a plurality of array antennas, the particular set of weights being to be applied to an array antenna that has received an arriving wave with maximum channel quality, and which combines arriving waves received with the array antennas.

Embodiments of the invention may provide a radio communication apparatus characterized in that the particular set of weights are such values as to allow each of the array antennas to function as an adaptive null-forming array antenna.

Embodiments of the present invention may provide a radio communication apparatus which applies to the plurality of array antennas a particular set of weights which allow one of the array antennas to have a main lobe and a null point in the arrival directions of a desired wave and of a disturbing wave, respectively, the one of the array antennas having received the desired wave and the disturbing wave as arriving waves with good channel quality.

Embodiments of the present invention may provide a radio communication apparatus which corrects weights to values such that the one of the array antennas has a main lobe and a null point in the directions of a desired wave and a disturbing wave, respectively, and applies the corrected weights in common to the plurality of array antennas.

Embodiments of the present invention may provide a radio communication apparatus characterized in that each of the array antennas is composed of elements which are arranged on a same virtual line or plane parallel to each position of the array antennas.

Embodiments of the present invention may provide a radio communication apparatus which further comprises section provided on a feed line of each of all or part of the array antennas, for using a set of weights for transmission of a transmission wave via the feed line. The set of weights are obtained by correcting the particular set of weights in accordance with a frequency difference between the transmission wave and an arriving wave.

Embodiments of the present invention may provide a radio communication apparatus in which each of all or part of the array antennas is paired with a transmission array antenna, and which additionally has a section for applying the particular set of weights to a feed line of each transmission array antenna.

Embodiments of the present invention may provide a radio communication apparatus which adapts to aerial beam forming antennas instead of the array antennas and applies a set of reactances to be loaded on elements of the aerial beam forming antennas instead of the particular set of weights.

Embodiments of the present invention may provide a radio communication apparatus which adapts to a plurality of adaptive beam forming array antennas independently performing beam forming instead of the array antennas, and corrects a set of weights to the above-mentioned particular set of weights. The set of weights are updated for each of adaptive beam forming array antennas, realizing the independently performed beam forming.

Embodiments of the present invention may provide a radio communication apparatus which adapts to a plurality of adaptive null-forming array antennas independently performing beam forming instead of the array antennas, and corrects a set of weights to the above-mentioned particular set of weights. The set of weights are updated for each of adaptive null-forming array antennas, realizing the independently performed beam forming.

The above radio communication apparatus will be described below more specifically.

In a first radio communication apparatus according to the invention, a channel quality monitoring section monitors channel quality of each of arriving waves that arrive at a plurality of array antennas. A computing section calculates, for elements of each of the array antennas, a set of weights which are such values as to allow each of the array antennas to function as an adaptive beam forming array antenna. A weight setting section selects a particular set of weights from the calculated sets of weights and applies the particular set of weights in common to the plurality of array antennas, the particular set of weights being to be applied to an array antenna that has received an arriving wave with maximum channel quality as monitored by the channel quality monitoring section. A combining section combines the arriving waves that have been received with the array antennas to which the particular set of weights are applied.

In this radio communication apparatus, the array antennas can continuously perform desired accurate beam forming, using a particular set of weights which are to be applied to an array antenna that has received an arriving wave with highest channel quality among the array antennas.

This realizes suppression of a disturbing wave arriving together with a desired wave, stable diversity reception through the beam forming, and combining processing performed by the combining section even in the case where the level of an arriving wave or a disturbing wave that arrives at each array antenna may vary largely.

In a second radio communication apparatus according to the invention, a channel quality monitoring section monitors channel quality of each of arriving waves that arrive at a plurality of array antennas. A computing section calculates arrival angles of a desired wave and a disturbing wave as the arrival waves for each of the array antennas. A weight setting section selects, from the calculated arrival angles, arrival angles of a desired wave and a disturbing wave as arrival waves with good channel quality as monitored by the channel quality monitoring section, and it applies a particular set of weights in common to the array antennas, the particular set of weights being such values as to allow each of the plurality of array antennas to have a main lobe and a null point in directions of the selected arrival angles of the desired wave and the disturbing wave, respectively. A combining section combines the arriving waves that have been received with the array antennas to which the particular set of weights are applied.

This radio communication apparatus can obtain a particular set of weights to be applied to the array antennas without calculating unnecessary sets of weights that are not applied to any array antennas, as long as the arrival angles of a desired wave and a disturbing wave are calculated with desired accuracy.

This realizes reduction in processing amounts required for beam forming of the array antennas as well as suppression of a disturbing wave arriving together with a desired wave, stable diversity reception through the beam forming, and combining processing performed by the combining section even in the case where the level of an arriving wave or a disturbing wave that arrives at each array antenna may vary largely.

In a third radio communication apparatus according to the invention, a channel quality monitoring section monitors channel quality of each of arriving waves that arrive at a plurality of array antennas. A computing section calculates arrival angles of a desired wave and a disturbing as the arriving waves and a set of weights for each of the array antennas, the set of weights being such values as to allow each of the array antennas to function as an adaptive null-forming array antenna. A weight setting section selects, from the calculated arrival angles, arrival angles of a desired wave and a disturbing wave as arrival waves with good channel quality as monitored by the channel quality monitoring section, corrects one of the calculated sets of weights to such values as to allow an array antenna to form a main lobe and a null point in directions of the selected arrival angles of the desired wave and the disturbing wave, respectively, the array antenna having received an arriving wave with maximum channel quality as measured by the channel quality monitoring section. The weight setting section then applies the corrected set of weights in common to all the array antennas. A combining section combines the arriving waves that have been received with the array antennas to which the corrected set of weights are applied.

This radio communication apparatus applies, to the array antennas, particular sets of weights which are obtained by correcting sets of weights calculated for the respective array antennas by the computing section in the above-described manner.

This makes the radio communication apparatus adaptable to different distances and various arrangements of the array antennas, and this also achieves suppression of a disturbing wave, stable diversity reception through predetermined beam forming, and combining processing performed by the combining section even in the case where the level of an arriving wave or a disturbing wave that arrives at each array antenna may vary largely.

In a fourth radio communication apparatus according to the invention, a channel quality monitoring section monitors channel quality of each of arriving waves that arrive at a plurality of aerial beam forming antennas. A computing section calculates a set of reactances for elements of each of the aerial beam forming antennas, the set of reactances being loaded on elements of each of the aerial beam forming antennas. A reactance setting section selects from the calculated sets of reactances a particular set of reactances which are to be loaded on an aerial beam forming antenna having received an arriving wave with maximum channel quality as monitored by the channel quality monitoring section, and applies the particular set of reactances in common to all the aerial beam forming antennas. A combining section combines the arriving waves that have been received with the aerial beam forming antennas on which the particular set of reactances are loaded.

In this radio communication apparatus, the aerial beam forming antennas can continuously perform desired accurate beam forming using a particular set of reactances which are to be loaded on an array antenna that has received an arriving wave with highest channel quality among the aerial beam forming antennas.

This realizes suppression of a disturbing wave arriving with a desired wave, stable diversity reception through the beam forming, and combining processing performed by the combining section even in the case where the level of an arriving wave or a disturbing wave that arrives at each array antenna may vary largely.

In a fifth radio communication apparatus according to the invention, a channel quality monitoring section monitors channel quality of each of arriving waves that arrive at a plurality of adaptive beam forming array antennas. A weight setting section selects, from sets of weights being loaded on the respective adaptive beam forming array antennas, a particular set of weights which are to be applied to an adaptive beam forming array antenna that has received an arriving wave with maximum channel quality as monitored by the channel quality monitoring section. It then applies the particular set of weights in common to the adaptive beam forming array antennas as corrected values. A combining section combines the arriving waves that have been received with the adaptive beam forming array antennas.

In this radio communication apparatus, the adaptive beam forming array antennas can continuously perform desired accurate beam forming simultaneously, using a particular set of weights, without impairing updates of weights to be applied to the adaptive beam forming array antennas to preferable values. The particular set of weights are to be applied to an adaptive beam forming array antenna that has received an arriving wave with highest channel quality.

This realizes suppression of a disturbing wave arriving with a desired wave, stable diversity reception through the beam forming, and combining processing performed by the combining section even in the case where the level of an arriving wave or a disturbing wave that arrives at each adaptive beam forming array antenna may vary largely.

In a sixth radio communication apparatus according to the invention, a channel quality monitoring section monitors channel quality of each of arriving waves that arrive at a plurality of array antennas. A computing section calculates, for elements of each of the array antennas, a set of weights that are such values as to allow each of the array antennas to function as an adaptive null-forming array antenna. A weight setting section selects, from the calculated sets of weights, a particular set of weights that are to be applied to an array antenna that has received an arriving wave with maximum channel quality as monitored by the channel quality monitoring section. It then applies the particular set of weights in common to the array antennas. A combining section combines the arriving waves that have been received with the array antennas to which the particular set of weights are applied.

In this radio communication apparatus, the array antennas can continuously form null points in the arrival directions of disturbing waves using a particular set of weights which are to be applied to an array antenna that has received an arriving wave with highest channel quality among the array antennas.

This realizes suppression of a disturbing wave arriving with a desired wave, stable diversity reception through the beam forming, and combining processing performed by the combining section even in the case where the level of an arriving wave or a disturbing wave that arrives at each array antenna may vary largely.

In a seventh radio communication apparatus according to the invention, each of the array antennas is composed of elements which are arranged on a same virtual line or plane parallel to each position of the plurality of array antennas.

This radio communication apparatus is capable of applying a set of weights in common to the array antennas as long as an arriving wave arrives at each array antenna in the form of a plane wave.

Therefore, it is possible to simplify the configuration of the radio communication apparatus and enhance the responsiveness and the reliability thereof, compared with the case where it is necessary to calculate sets of weights for each of the array antennas.

In an eighth radio communication apparatus according to the invention, provided is/are feeding section(s) on feed line(s) of all or part of the array antennas, for employing a set of weights for transmission of a transmission wave via the feed line. The set of weights are obtained by correcting the particular set of weights in accordance with a frequency difference between the transmission wave and an arriving wave.

In this radio communication apparatus, all or part of the array antennas can be used for both reception of an arriving wave and transmission of a transmission wave even in the case where the arriving wave and the transmission wave have different frequencies from each other.

This makes it possible to form a full-duplex radio transmission path of a frequency division scheme with high reliability without impairing suppression of a disturbing wave by the above-described beam forming and diversity reception.

In a ninth radio communication apparatus according to the invention, each of all or part of the array antennas is paired with a transmission array antenna which is used for transmitting a transmission wave having a different frequency than that of an arriving wave. Also provided is/are feeding section(s) for applying the particular set of weights to a feed line of the transmission array antenna.

In this radio communication apparatus, the computing section and the weight setting section can be used for both reception of an arriving wave and transmission of a transmission wave even in the case where the arriving wave and the transmission wave have different frequencies from each other.

This makes it possible to form a full-duplex radio transmission path of a frequency division scheme with high reliability without impairing suppression of a disturbing wave by the above-described beam forming and diversity reception.

In a 10th radio communication apparatus according to the invention, a channel quality monitoring section monitors channel quality of each of arriving waves that arrive at a plurality of aerial beam forming antennas. A computing section calculates, for elements of each of the aerial beam forming antennas, a set of reactances which are to be loaded on each of the aerial beam forming antennas and are such values as to allow each aerial beam forming antenna to function as an adaptive null-forming array antenna. A reactance setting section selects, from the calculated sets of reactances, a particular set of reactances which are to be loaded on an aerial beam forming antenna that has received an arriving wave with maximum channel quality as monitored by the channel quality monitoring section. It applies the particular set of reactances in common to all the aerial beam forming antennas. A combining section combines the arriving waves that have been received with the aerial beam forming antennas on which the particular set of reactances are loaded.

In this radio communication apparatus, the aerial beam forming antennas can continuously form null points with accuracy in the arrival directions of disturbing waves using a particular set of reactances which are to be loaded on an array antenna that has received an arriving wave with highest channel quality among the aerial beam forming antennas.

This realizes suppression of a disturbing wave arriving with a desired wave, stable diversity reception through the beam forming, and combining processing performed by the combining section even in the case where the level of an arriving wave or a disturbing wave that arrives at each aerial beam forming antenna may vary largely.

in an 11th radio communication apparatus according to the invention, a channel quality monitoring section monitors channel quality of each of arriving waves that arrive at a plurality of aerial beam forming antennas. A computing section calculates arrival angles of a desired wave and a disturbing wave as the arrival waves for each of the aerial beam forming antennas. A reactance setting section selects, from the calculated arrival angles, arrival angles of a desired wave and a disturbing wave which are arrival waves with good channel quality as monitored by the channel quality monitoring section. It applies a particular set of reactances in common to all the aerial beam forming antennas. The particular set of reactances are such values to allow each of the plurality of aerial beam forming antennas to have a main lobe and a null point in directions of the selected arrival angles of the desired wave and the disturbing wave, respectively. A combining section combines the arriving waves that have been received with the aerial beam forming antennas on which the particular set of reactances are loaded.

This radio communication apparatus can obtain a particular set of reactances to be loaded on the aerial beam forming antennas without calculating unnecessary sets of reactances that are not applied to any aerial beam forming antennas, as long as the arrival angles of a desired wave and a disturbing wave are calculated with desired accuracy

This realizes reduction in processing amounts required for beam forming of the aerial beam forming antennas as well as suppression of a disturbing wave arriving with a desired wave, stable diversity reception through the beam forming, and combining processing performed by the combining section even in the case where the level of an arriving wave or a disturbing wave that arrives at each aerial beam forming antenna may vary largely.

In a 12th radio communication apparatus according to the invention, a channel quality monitoring section monitors channel quality of each of arriving waves that arrive at a plurality of aerial beam forming antennas. A computing section calculates a set of reactances and arrival angles of a desired wave and a disturbing wave as the arriving waves for each of the aerial beam forming antennas. The set of reactances are such values as to allow each of the aerial beam forming antennas to function as an adaptive null-forming array antenna. A reactance setting section selects, from the calculated arrival angles, arrival angles of a desired wave and a disturbing wave that are arrival waves with good channel quality as monitored by the channel quality monitoring section. And it corrects one of the calculated sets of reactances to such values as to allow an aerial beam forming antenna to have a main lobe and a null point in directions of the selected arrival angles of the desired wave and the disturbing wave, respectively. The aerial beam forming antenna has received an arriving wave with maximum channel quality as measured by the channel quality monitoring section. The reactance setting section applies the corrected set of reactances in common to all the aerial beam forming antennas. A combining section combines the arriving waves that have been received with the aerial beam forming antennas on which the corrected set of reactances are loaded.

This radio communication apparatus applies, to each of the aerial beam forming antennas, a particular set of reactances which are obtained by correcting sets of reactances calculated for a selected aerial beam forming antenna by the computing section.

This makes the radio communication apparatus adaptable to different distances and various arrangements of the aerial beam forming antennas, and this also achieves suppression of a disturbing wave, stable diversity reception through predetermined beam forming, and combining processing performed by the combining section even in the case where the level of an arriving wave or a disturbing wave that arrives at each aerial beam forming antenna may vary largely.

In a 13th radio communication apparatus according to the invention, each of the aerial beam forming antennas is composed of elements which are arranged on a same virtual line or plane parallel to each position of the plurality of aerial beam forming antennas.

This radio communication apparatus is capable of applying a set of reactances in common to the aerial beam forming antennas as long as an arriving wave arrives at each aerial beam forming antenna in the form of a plane wave.

Therefore, it is possible to simplify the configuration of the radio communication apparatus and enhance the responsiveness and the reliability thereof, compared with the case where it is necessary to calculate sets of reactances for each of the aerial beam forming antennas.

In a 14th radio communication apparatus according to the invention, provided is/are feeding section(s) on feed line(s) of all or part of the aerial beam forming antennas. The feeding section(s) uses(s) a set of reactances for transmission of a transmission wave via the feed line. The set of reactances are obtained by correcting the particular set of reactances in accordance with a frequency difference between the transmission wave and an arriving wave.

In this radio communication apparatus, all or part of the aerial beam forming antennas can be used for both reception of an arriving wave and transmission of a transmission wave even in the case where the arriving wave and the transmission wave have different frequencies from each other.

This makes it possible to form a full-duplex radio transmission path of a frequency division scheme with high reliability without impairing suppression of a disturbing wave by the above-described beam forming and diversity reception.

In a 15th radio communication apparatus according to the invention, each of all or part of the aerial beam forming antennas is paired with a transmission aerial beam forming antenna which is to be used for transmitting a transmission wave with a different frequency from that of an arriving wave. Further provided is/are feeding section(s) for applying the particular set of reactances to feeding lines of the aerial beam forming antennas.

In this radio communication apparatus, the computing section and the reactance setting section can be used for both reception of an arriving wave and transmission of a transmission wave even in the case where the arriving wave and the transmission wave have different frequencies from each other.

This makes it possible to form a full-duplex radio transmission path of a frequency division scheme with high reliability without impairing suppression of a disturbing wave by the above-described beam forming and diversity reception.

In a 16th radio communication apparatus according to the invention, a channel quality monitoring section monitors channel quality of each of arriving waves that arrive at a plurality of adaptive null-forming array antennas. A weight setting section selects a particular set of weights from sets of weights which are to be loaded on the respective adaptive null-forming array antennas. The particular set of weights are applied to an adaptive null-forming array antenna that has received an arriving wave with maximum channel quality as monitored by the channel quality monitoring section. The weight setting section applies the particular set of weights as corrected values in common to the adaptive null-forming array antennas. A combining section combines the arriving waves that have been received with the adaptive null-forming array antennas.

In this radio communication apparatus, the adaptive null-forming array antennas can simultaneously form null points in the arrival directions of disturbing waves with accuracy, using a particular set of weights without impairing updates of sets of weights to be applied to the adaptive null-forming array antennas to preferable values. The particular set of weights are to be applied to an adaptive null-forming array antenna that has received an arriving wave with highest channel quality.

This realizes suppression of a disturbing wave arriving with a desired wave, stable diversity reception through the beam forming, and combining processing performed by the combining section even in the case where the level of an arriving wave or a disturbing wave that arrives at each adaptive null-forming array antenna may vary largely.

In a 17th radio communication apparatus according to the invention, a channel quality monitoring section monitors channel quality of each of arriving waves that arrive at a plurality of adaptive null-forming array antennas. A computing section calculates arrival angles of a desired wave and a disturbing wave as the arriving waves for each of the plurality of adaptive null-forming array antennas. A weight setting section selects, from the calculated arrival angles, arrival angles of a desired wave and a disturbing wave that are arrival waves having good channel quality as monitored by the channel quality monitoring section, and it applies a particular set of weights in common to all the adaptive null-forming array antennas as corrected values. The particular set of weights refer to such values as to allow each of the plurality of adaptive null-forming antennas to have a main lobe and a null point in directions of the selected arrival angles of the desired wave and the disturbing wave, respectively. A combining section combines the arriving waves that have been received with the adaptive null-forming array antennas.

This radio communication apparatus is able to obtain a particular set of weights to be applied to the adaptive null-forming antennas without calculating unnecessary sets of weights that are not applied to any adaptive null-forming array antennas and without impairing updates of sets of weights to be applied to the adaptive null-forming array antennas to preferable values, as long as the arrival angles of a desired wave and a disturbing wave are calculated with desired accuracy.

Therefore, it its possible to reduce processing amounts necessary for beam forming of the adaptive null-forming array antennas as well as to effectively suppress a disturbing wave arriving with a desired wave, and perform stable diversity reception through the beam forming and combining processing performed by the combining section even in the case where the level of an arriving wave or a disturbing wave that arrives at each adaptive null-forming array antenna may vary largely.

In an 18th radio communication apparatus according to the invention, a channel quality monitoring section monitors channel quality of each of arriving waves that arrive at a plurality of adaptive null-forming array antennas. A computing section calculates arrival angles of a desired wave and a disturbing wave as the arriving waves for each of the adaptive null-forming array antennas. A weight setting section selects, from the calculated arrival angles, arrival angles of a desired wave and a disturbing wave that are arrival waves with good channel quality as monitored by the channel quality monitoring section, and it corrects a set of weights being to be applied to an adaptive null-forming antenna to such values as to allow the adaptive null-forming array antenna to have a main lobe and a null point in directions of the selected arrival angles of the desired wave and the disturbing wave, respectively. The adaptive null-forming antenna is the one that has received an arriving wave with maximum channel quality as measured by the channel quality monitoring section. The weight setting section applies the corrected set of weights in common to all the adaptive null-forming array antennas. A combining section combines the arriving waves that have been received with the adaptive null-forming array antennas.

This radio communication apparatus applies to the adaptive null-forming array antennas a particular set of weights which are obtained by correcting sets of weights calculated for the adaptive null-forming array antennas by the computing section.

This makes the radio communication apparatus adaptable to different distances and various arrangements of the adaptive null-forming array antennas, and this also realizes suppression of a disturbing wave, stable diversity reception through predetermined beam forming, and combining processing that is performed by the combining section even in the case where the level of an arriving wave or a disturbing wave that arrives at each adaptive null-forming array antenna may largely vary.

In a 19th radio communication apparatus according to the invention, each of the adaptive null-forming array antennas is composed of elements that are arranged on a same virtual line or plane parallel to each position of the plurality of adaptive null-forming array antennas.

In this radio communication apparatus, it is possible to apply a set of weights in common to the adaptive null-forming array antennas as long as an arriving wave arrives at every adaptive null-forming array antenna in the form of a plane wave.

Therefore, it is possible to simplify the configuration of the radio communication apparatus and enhance the responsiveness and the reliability thereof, compared with the case where it is necessary to calculate sets of weights for each of the adaptive null-forming array antennas.

In a 20th radio communication apparatus according to the invention, further provided is/are feeding section(s) on feed line(s) of all or part of the adaptive beam forming array antennas. The feeding section(s) employ(s) a set of weights for transmission of a transmission wave via the feed line(s). The set of weights are obtained by correcting the particular set of weights in accordance with a frequency difference between the transmission wave and an arriving wave.

In this radio communication apparatus, all or part of the adaptive beam forming array antennas can be used for both reception of an arriving wave and transmission of a transmission wave even in the case where the arriving wave and the transmission wave have different frequencies from each other.

This realizes secure formation of a full-duplex radio transmission path of a frequency division scheme without impairing suppression of a disturbing wave by the above-described beam forming and diversity reception.

In a 21st radio communication apparatus according to the invention, further provided is/are feeding section(s) on feed line(s) of all or part of the adaptive null-forming array antennas. The feeding section(s) employ(s) a set of weights for transmission of a transmission wave via the feed line(s). The set of weights are obtained by correcting the particular set of weights in accordance with a frequency difference between the transmission wave and an arriving wave.

In this radio communication apparatus, all or part of the adaptive null-forming array antennas can be used for both reception of an arriving wave and transmission of a transmission wave even in the case where the arriving wave and the transmission wave have different frequencies from each other.

This realizes secure formation of a full-duplex radio transmission path of a frequency division scheme without impairing suppression of a disturbing wave by the above-described beam forming and diversity reception.

In a 22nd radio communication apparatus according to the invention, all or part of the adaptive beam forming array antennas is/are paired with transmission array antenna(s) which is/are to be used for transmitting a transmission wave with a different frequency than that of an arriving wave. Further provided is/are feeding section(s) for applying the particular set of weights to feeding line(s) of the transmission array antenna(s).

In this radio communication apparatus, the weight setting section can be used for both reception of an arriving wave and transmission of a transmission wave even in the case where the arriving wave and the transmission wave have different frequencies from each other.

This achieves secure formation of a full-duplex radio transmission path of a frequency division scheme via the adaptive beam forming array antennas and transmission array antennas without impairing suppression of a disturbing wave by the above-described beam forming and diversity reception.

In a 23rd radio communication apparatus according to the invention, all or part of the adaptive null-forming array antennas is/are paired with transmission array antenna(s) which is/are to be used for transmitting a transmission wave with a different frequency than that of an arriving wave. Further provided is/are feeding section(s) for applying the particular set of weights to feeding line(s) of the transmission array antenna(s).

In this radio communication apparatus, the computing section and the weight setting section can be used for both reception of an arriving wave and transmission of a transmission wave even in the case where the arriving wave and the transmission wave have different frequencies from each other.

This realizes secure formation of a full-duplex radio transmission path of a frequency division scheme without impairing suppression of a disturbing wave by the above-described beam forming, and diversity reception.

Preferred embodiments of the invention will now be described by way of example only with reference to the accompanying drawings, in which:

Fig. 1 shows first to third embodiments of the invention;
Fig. 2 shows an example of improved channel quality achieved by the first embodiment;
Fig. 3 shows the detailed configuration of an antenna duplexer;
Fig. 4 shows modifications of the first to third embodiments of the invention;
Fig. 5 shows the configuration of a first known antenna system;
Fig. 6 shows the configuration of a second known antenna system; and
Fig. 7 shows the configuration of a third known antenna system.

Embodiments of the present invention will be hereinafter described with reference to the drawings.

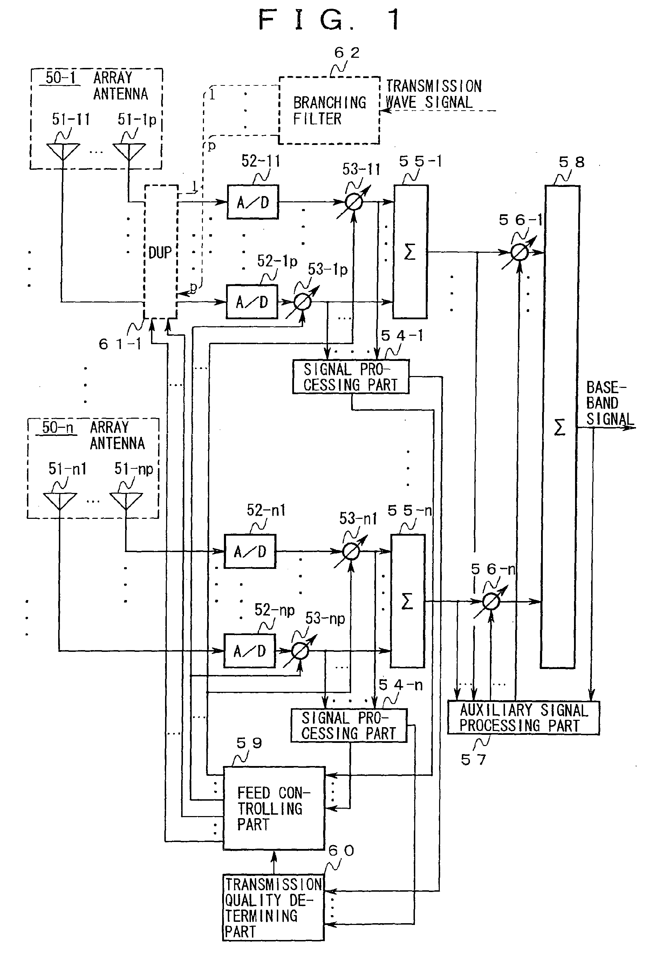

Fig. 1 shows first to third embodiments of the invention.

As shown in Fig. 1, each of array antennas 50-1 to 50-n is composed of a plurality p of elements 51-11 to 51-1p, ..., 51-n1 to 51-np that have the same structure and arrangement in a direction in which an arriving wave (for the sake of simplicity, it is assumed here that an arriving wave is a plane wave) may arrive. And the array antennas 50-1 to 50-n are arranged at such a long distance as to produce sufficiently weak mutual spatial correlation. In the following description, common items in association with the array antennas 50-1 to 50-n will be given a character "C", signifying that it can be any of the reference numerals 50-1 to 50-n and 51-1 to 51-n.

The feeding points of the elements 51-C1 to 51-Cp are connected to the inputs of A/D converters (A/D) 52-C1 to 52-Cp. The outputs of the A/D converters 52-C1 to 52-Cp are connected to one inputs of multipliers 53-C1 to 53-Cp, respectively. The outputs of the multipliers 53-C1 to 53-Cp are connected to the respective inputs of each of a signal processing part 54-C and an adder ($\Sigma$) 55-C. The output of the adder 55-C is connected to one input of a multiplier 56-C and a corresponding input of an auxiliary signal processing part 57. The plurality n of outputs of the auxiliary signal processing part 57 are connected to the other inputs of the multipliers 56-1 to 56-n, respectively. The outputs of the multipliers 56-1 to 56-n are connected to the respective inputs of an adder 58. The output of the adder 58 is connected to a corresponding input of the auxiliary signal processing part 57. A baseband signal representing an arriving wave is obtained at the output of the adder 58.

One output of the signal processing part 54-C is connected to a corresponding input of a feed controlling part 59. The plurality p of outputs of the feed controlling part 59 are connected to the other inputs of the multipliers 53-C1 to 53-Cp, respectively. The other output of the signal processing part 54-C is connected to a corresponding input of a channel quality determining part 60. The output of the channel quality determining part 60 is connected to the control input of the feed controlling part 59.

The operation of the first embodiment of the invention will be described below with reference to Fig. 1.

The signal processing part 54-C performs the following processing:

(1) Calculates a correlation matrix RCyy that is given by the following equation for a column vector YC(t) having, as elements, arriving waves yC1 to yCn that arrive at the elements 51-C1 to 51-Cp in parallel and are supplied in parallel from the feeding points of the elements 51-C1 to 51-Cp via the A/D converters 52-C1 to 52-Cp and the multipliers 53-C1 to 53-Cp and a row vector $Y(t)^H$ having, as elements, complex numbers yC1* to yCp* that are conjugate to the arriving waves yC1 to yCn:

$$RCyy = E[YC(t) \cdot YC(t)^H] \qquad (1)$$

(2) Calculates channel quality QC as evaluation values eC(t) that are given by the following equation for a known signal (e.g., a pilot signal) rC(t) that was received as arriving waves yC1 to yCp and the above-described column vector YC(t):

$$eC(t) = |YC(t) - rC(t)|^2 \qquad (2)$$

(3) Calculates a reception error $rC_{er}$ (= $E[eC(t) \cdot rC(t)^*]$), and collectively calculates, for the reception error $rC_{er}$, n weights to be supplied in parallel to the inputs (referred to above as "the other inputs") of the multipliers 53-C1 to 53-Cp to form a weight vector WCopt that is given by the following equation and has the n weights arranged in time-series order,:

$$WCopt = RCyy^{-1} \cdot rC_{er} \qquad (3)$$

On the other hand, the channel quality determining part 60 determines maximum channel quality Qmax among the channel quality Q1 to Qn, and determines a particular one of the array antennas 50-1 to 50-n that has received an arriving wave with the maximum channel quality Qmax.

The feed controlling part 59 supplies, in parallel, the multipliers 53-11 to 53-1p, ..., 53-n1 to 53-np with a particular combination of weights calculated for the particular array antenna among the combinations of weights calculated collectively as the elements of the weight vectors WCopt for the array antennas 50-1 to 50-n.

The adder 55-C combines the arriving waves that arrive at the elements 51-C1 to 51-Cp and are supplied in parallel from their feeding points via the A/D converters 52-C1 to 52-Cp and the multipliers 53-C1 to 53-Cp.

Therefore, an arriving wave obtained by suppressing a disturbing (undesired) wave contained in the arriving wave arriving at the array antenna 50-C is obtained at the output of the adder 55-C.

The multipliers 56-1 to 56-n and the adder 58 produce a baseband signal (mentioned above) as the sum of products of weights that are supplied in parallel from the auxiliary signal processing part 57 and the arriving waves.

With the above operation, even if the DU ratio of an arriving wave or the level of a desired wave contained therein is very low, the array antennas 50-1 to 50-n can perform beam forming stably by using the same weights as for a particular array antenna that provides maximum channel quality of a received arriving wave.

Under such beam forming disturbing waves are suppressed, and the multipliers 56-1 to 56-n and the adder 58 perform diversity reception in cooperation with each other under the initiative of the auxiliary signal processing part 57.

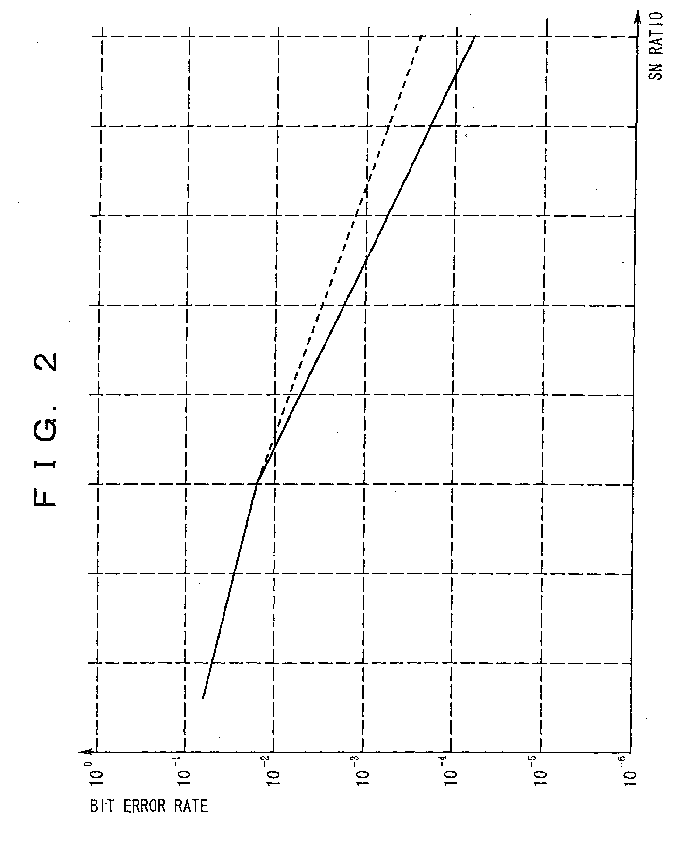

Therefore, according to this embodiment, a higher, more stable channel quality can be attained (for example, as indicated by a solid line in Fig. 2) than in a conventional example (indicated by a broken line in Fig. 2).

In this embodiment, the signal processing part 54-C generates weights so that the array antenna 50-C can serve as an adaptive beam forming array antenna that forms a main lobe in a direction in which a desired wave arrives and copes with direction changes.

However, the weights may be such values as to allow the array antenna 50-C to serve as an adaptive null-forming array antenna that also forms a null point in the arrival direction of a disturbing wave.

In this embodiment, each of the array antennas 50-1 to 50-n is a combination of the elements that have the same structure and arrangement in a direction in which an arriving wave may arrive.

However, the invention is not limited to such a configuration. For example, where the elements constituting each of the array antennas 50-1 to 50-n do not have a common arrangement in the above-mentioned direction or have different structures, the feed controlling part 59 or a component capable of replacing it may calculate, with prescribed accuracy at prescribed response speed, weights that absorb the differences between the directions or structures of the elements of the array antennas 50-1 to 50-n.

The second embodiment of the invention will be hereinafter described.

This embodiment is characterized in the following procedure of processing that is performed by the signal processing part 54-C, the feed controlling part 59, and the channel quality determining part 60.

The operation of the second embodiment of the invention will be described below with reference to Fig. 1.

The feed controlling part 59 has a weight table in which all combinations of azimuth angles θd indicating directions in which a desired wave may arrive and azimuth angles θu indicating directions in which a disturbing wave may arrive and a combination of suitable weights to be applied, in common, to the array antennas 50-1 to 50-n for each of the above combinations.

The signal processing part 54-C not only calculates channel quality QC (described above) but also calculates, in the following manner, an arrival angle θu indicating a direction in which a maximum-level disturbing wave arrives and an arrival angle θd of a desired wave:

- Calculates an arrival angle θd of a desired wave contained in arriving waves yC1 to yCp according to an arrival direction estimation algorithm such as a high-resolution algorithm.
- Determines, as a maximum eigenvalue of a correlation matrix RCyy (described above), a maximum level among levels of disturbing wave contained in the arriving waves yC1 to yCp, and calculates an arrival angle θu indicating the arrival direction of the disturbing wave having the maximum level as an eigenvector of the correlation matrix RCyy corresponding to the maximum eigenvalue.

The channel quality determining part 60 determines maximum channel quality Qmax among the pieces of channel quality Q1 to Qn, and determines a particular array antenna that has received an arriving wave with the channel quality Qmax.

The feed controlling part 59 selects particular arrival angles Θd and Θu that have been calculated for the particular array antenna among the arrival angles θd and θu calculated by the signal processing parts 54-1 to 54-n.

Further, the feed controlling part 59 supplies the multipliers 53-11 to 53-1p, ..., 53-n1 to 53-np with particular weights that are registered in the weight table as corresponding to the combination of the particular arrival angles Θd and Θu.

With the above operation, even if the DU ratio of an arriving wave or the level of a desired wave contained therein is very low, the array antennas 50-1 to 50-n can perform beam forming stably by using such weights as to allow formation of both of a main lobe and a null point in directions in which a desired wave and a disturbing wave contained in an arriving wave having maximum channel quality arrive among arriving waves received in parallel by the array antennas 50-1 to 50-n.

Therefore, this embodiment achieves suppression of a disturbing wave which occurs due to all the array antennas 50-1 to 50-n's functioning as adaptive null-forming array antennas as well as predetermined diversity reception performed by the multipliers 56-1 to 56-n and the adder 58 under the initiative of the auxiliary signal processing part 57.

In this embodiment, supplied to the multipliers 53-11 to 53-1p, ..., 53-n1 to 53-np is a particular combination of weights that are such values as to allow the array antennas 50-1 to 50-n to function as adaptive null-forming array antennas.

However, the particular combination of weights may be such a combination of weights as to allow the array antennas 50-1 to 50-n to function as mere adaptive beam forming array antennas that do not form a null point in the arrival direction of a disturbing wave.

In this embodiment, a combination of weights, which allows formation of a null point in the arrival direction of only one with a maximum level among disturbing waves arriving at the array antennas 50-1 to 50-n in parallel, is supplied in common to the multipliers 53-11 to 53-1 p, ..., 53-n1 to 53-np.

However, the invention is not limited to such a configuration. For example, where a plurality of disturbing waves may arrive at the array antennas 50-1 to 50-n in parallel, a combination of weights that allows formation of a null point in an arrival angle Θu that is calculated in such a manner that eigenvalues of correlation matrices RCyy corresponding to the respective disturbing waves are used as weights and that is given as an weighted average of eigenvectors of the correlation matrices RCyy corresponding to the respective eigenvalues may be used in a similar manner.

In this embodiment, all the combinations of weights to be supplied, in common, to the multipliers 53-11 to 53-1p, ..., 53-n1 to 53-np are stored in the weight table in advance.

However, the invention is not limited to such a configuration. For example, where a cer tain reduction in response speed is allowable, the hardware scale and the power consumption may be reduced by calculating a combination of weights to be supplied, in common, to the multipliers 53-11 to 53-1p, ..., 53-n1 to 53-np by arithmetic operations (suitable for the structures, arrangements, etc. of the array antennas 50-1 to 50-n) that are performed when necessary in accordance with particular arrival angles Θd and Θu.

In this embodiment, a particular combination of weights selected by the feed controlling part 59 from the combinations of weights that are registered in the weight table in advance is supplied, in common, to the multipliers 53-11 to 53-1p, ..., 53-n1 to 53-np.

However, the invention is not limited to such a configuration. For example, different combinations of weights that are obtained by performing, on combinations of weights calculated by the respective signal processing parts 54-1 to 54-n, corrections of compressing deviations of arrival angles of one or both of desired waves and disturbing waves contained in arriving waves arriving in parallel at the array antennas 50-1 to 50-n from arrival angles calculated for an arriving wave arriving with maximum channel quality among those arriving waves may be supplied to the multipliers 53-11 to 53-1p, ..., 53-n1 to 53-np. This is to flexibly adapt to physical or geographical distances between the installation sites of the array antennas 50-1 to 50-n and differences between the structures and the element arrangements of the array antennas 50-1 to 50-n.

Such corrections may not necessarily be performed on all the combinations of weights calculated by the respective signal processing parts 54-1 to 54-n. One of simplification of the configuration, power saving, and increase in response speed may be attained by, for example, supplying a common combination of weights to multipliers downstream of array antennas that are regarded as having no physical or geographical distances between their installation sites or differences between their structures and element arrangements.

The third embodiment of the invention will be hereinafter described.

An antenna duplexer (DUP) 61-1 is disposed between the feeding points of the elements 51-11 to 51-1p of the array antenna 50-1 and the inputs of the A/D converters 52-11 to 52-1p. A transmission wave signal (for the sake of simplicity, it is assumed that the transmission wave signal whose occupied band is different from the band of an arriving wave) is supplied to the plurality n of transmission inputs of the antenna duplexer 61-1 via a branching filter 62. Corresponding outputs of the feed controlling part 59 are connected to the plurality p of weight inputs of the antenna duplexer 61-1.

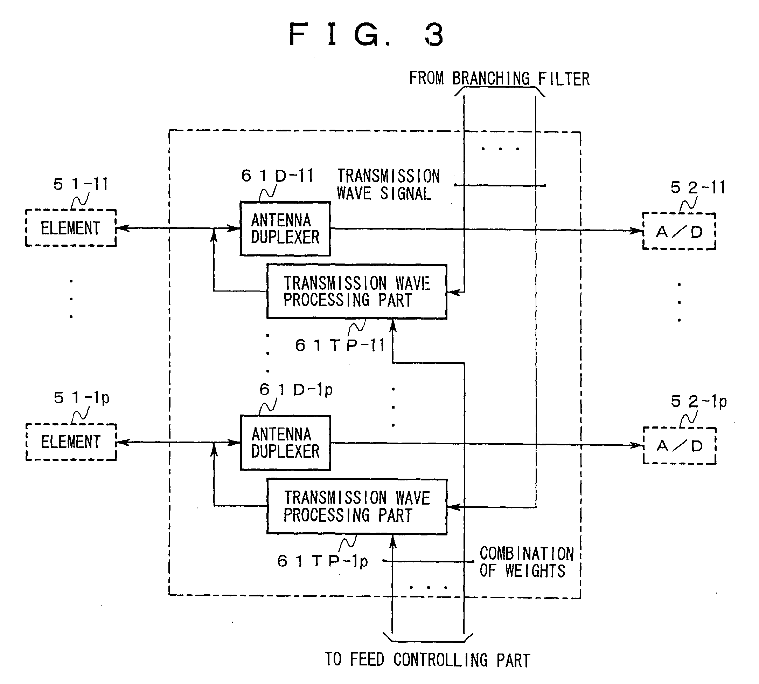

As shown in Fig. 3, the antenna duplexer 61-1 is composed of the following components:

- Duplexing parts 61 D-11 to 61 D-1 p that serve for impedance matching with the feeding points of the elements 51-11 to 51-1p, have a sharp attenuation pole in the occupied bandwidth of the transmission wave signal, and passes, to the A/D converters 52-11 to 52-1p, occupied-bandwidth components of arriving waves that are supplied from the feeding points in parallel.

- Transmission wave processing parts 61TP-11 to 61TP-1p that multiply the transmission wave signal supplied via the branching filter 62 by weights supplied from the feed controlling part 59, and supply resulting generated transmission waves to the feeding points of the elements 51-11 to 51-1p.

The operation of the third embodiment of the invention will be described below with reference to Fig. 1.

This embodiment is characterized by the following processing that is performed by the antenna duplexer 61-1 and the feed controlling part 59.

As in the case of the first or second embodiment, the feed controlling part 59 supplies the multipliers 53-C1 to 53-Cp with a combination of weights to be used for causing the array antennas 50-1 to 50-n to function as adaptive beam forming array antennas or adaptive null-forming array antennas.

in parallel with the processing of supplying such a combination of weights to the multipliers 53-C1 to 53-Cp, the feed controlling part 59 performs the following processing:

- Every time a combination of weights to be supplied to the multipliers 53-C1 to 53-Cp is determined, calculates such a combination of weights as to allow the array antenna 50-1 to function as an adaptive beam forming array antenna or an adaptive null-forming array antenna in the occupied band of a transmission wave signal on the basis of the thus-determined combination of weights and a frequency difference between an arriving wave and the transmission wave.
- Supplies the calculated combination of weights to the transmission wave processing parts 61TP-11 to 61 TP-1p.

That is, a transmitting part that is composed of the branching filter 62 and the transmission wave processing parts 61TP-11 to 61TP-1p is roughly coupled with the A/D converters 52-11 to 52-1p and a receiving part downstream thereof on the frequency axis by the above-mentioned attenuation pole.

Further, the array antenna 50-1 can serve for both transmission and reception that are suitable for a desired channel arrangement and frequency allocation because the transmission wave processing parts 61TP-11 to 61TP-1p are supplied with a combination of weights in accordance with a frequency difference between a transmission wave and an arriving wave.

Therefore, according to this embodiment, disturbing waves contained in arriving waves are suppressed and diversity reception is attained with the use of the adder 58 because the array antennas 50-1 to 50-n function as adaptive beam forming array antennas or adaptive null-forming array antennas. Further, this embodiment prevents unintended radiation of a transmission wave to regions other than a wireless zone that is formed according to the directivity of the array antenna 50-1.

In this embodiment, only the array antenna 50-1 serves for both transmission and reception. However, the invention is not limited to such a configuration. For example, diversity transmission may be attained by the following configuration:

- Antenna duplexers corresponding to the above-described antenna duplexer 61-1 are additionally provided for respective desired ones of the array antennas 50-1 to 50-n.
- The branching filter 62 distributes a transmission wave signal to those antenna duplexers in parallel.
- The feed controlling part 59 supplies a combination of weights that is suitable for a frequency difference between the transmission wave and an arriving wave to the transmission wave processing parts of those antenna duplexers in parallel.

In this embodiment, a combination of weights to be supplied to the transmission wave processing parts 61TP-11 to 61TP-1p is generated by correcting a combination of weights to be supplied to the multipliers 53-11 to 53-1p in accordance with a frequency difference between a transmission wave and an arriving wave.

However, the invention is not limited to such a configuration. For example, the above-mentioned frequency difference may be absorbed by an array antenna that is provided separately from the array antenna 50-1 and serves for only transmission, and a common combination of weights may be supplied in parallel to the transmission wave processing parts 61TP-11 to 61TP-1p and the multipliers 53-11 to 53-1p.

In each of the above embodiments, the combination of weights to be supplied to the multipliers 53-11 to 53-1p, ..., 53-n1 to 53-np in parallel is updated by the feed controlling part 59.

However, the invention is not limited to such a configuration. For example, where the combination of weights is updated for each array antenna, it can be configured to immediately cope with a rapid variation in the transmission characteristic of a radio transmission path and to quickly stabilize channel quality of a newly formed radio channel by correcting an updated combination of weights at a prescribed frequency.

In each of the above embodiments, adaptive beam forming array antennas or adaptive null-forming array antennas are formed as a result of the operation that the characteristics of the feed lines of the array antennas 50-1 to 50-n are updated according to the adaptive algorithm.

However, the invention is not limited to radio transmission systems using such array antennas 50-1 to 50-n. For example, the invention is also applicable to equipment of an antenna system such as a radio terminal that accesses a mobile communication system or a wireless LAN that is required to satisfy not only a low cost and low power consumption but also a wide dynamic range.

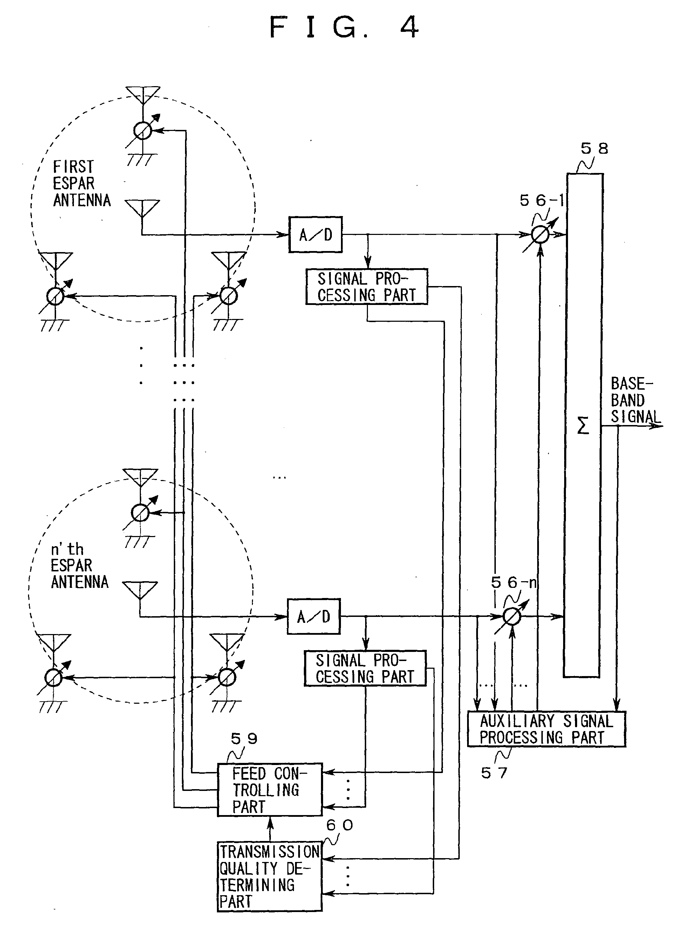

As shown in Fig. 4, a low cost, low power consumption, and a wide dynamic range may be realized by using, instead of the array antennas 50-1 to 50-n, RESAA(Reactively Steered Adaptive Array) antennas (aerial beam forming antennas) in which only a particular element is supplied with power directly and the reactance to be loaded on each of elements disposed in the vicinity of the particular element is varied according to a prescribed algorithm.

Where the equipment of an antenna system incorporates the aerial beam forming antennas therein for serving for both transmission and reception, for example, separate elements may be provided therein and directly used for transmission and reception, respectively. Alternatively, a certain element used for both transmission and reception may be provided separately (as a stack or the like) or it may be used in a suitable form for a desired multiple access scheme or frequency allocation, be invalidated electronically when necessary.

Where the above-mentioned RESAA antennas are used, each signal processing part cannot directly refer to arriving waves that arrive at the respective elements other than the above-mentioned particular element. When arriving waves that arrive at the respective elements of an array antenna are combined together in a radio frequency range or an intermediate frequency band, the signal processing part 54-C cannot directly refer to the arriving waves that arrive at the respective elements.

However, in either case, the signal processing part 54-C calculates, according to the following procedure, the value of reactance with which each element of the RESAA antenna is to be loaded or a set of weights to be applied to the respective elements of the array antenna:

- Temporarily changes reactance values or weights for the respective elements during a period when a known pilot signal or the like arrives as an arriving wave.
- Calculates a preferable combination of reactance values or weights according to an algorithm for obtaining such unknowns as to establish a known mathematical relationship between the changed reactance values or weights and arriving waves that are received in a state that the changed reactance values or weights are used, and that all the elements are in cooperation with one another.

In each of the above embodiments, a same combination of weights is applied to all the array antennas 50-1 to 50-n.

However, the invention is not limited to such a configuration. For example, installation sites of the array antennas 50-1 to 50-n may be allocated in various ways by applying a same combination of weights only to part of the array antennas 50-1 to 50-n that are not very distant from each other geographically or physically.

As for array antennas installed at distant sites, a combination of weights that are corrected in accordance with all or part of the following items may be applied:

- Positions relative to the other array antennas.
- An area where a transmitting end of an arriving wave may exist.
- A desired zone configuration.

In each of the above embodiments, the invention is applied to the antenna system of a radio terminal that accesses a mobile communication system or a wireless LAN.

However, the invention is not limited to radio transmission systems and radio communication systems such as mobile communication system and wireless LANs. For example, the invention can also be applied to measuring instruments and a variety of radio applied systems such as navigation systems, positioning systems, and ranging systems.

In each of the above embodiments, the multipliers 56-1 to 56-n and the adder 58 perform maximum SN ratio combining under the initiative of the auxiliary signal processing part 57.

However, the invention is not limited to the case of performing such maximum SN ratio combining. Any type of combining such as co-phase combining, minimum dispersion combining, or notch detection type MID combining may be employed as long as a desired diversity effect is attained that is suitable for all or part of a multiple access scheme, a modulation scheme, a zone configuration, and channel allocation and the transmission characteristic of a radio transmission path.

In each of the above embodiments, the operations such as multiplications for attaining desired beam forming or null-forming are performed in the baseband.

Alternatively, equivalent operations may be performed in the radio frequency band or the intermediate frequency band as long as they adapt to the equipment configuration and a frequency band, channel allocation, a zone configuration, a multiple access scheme, a modulation scheme, etc.

The invention is not limited to the above embodiments and various modifications may be made without departing from the scope of the invention. Any improvement may be made in part or all of the components.

## Claims

1. A radio communication apparatus comprising:

   a channel quality monitoring section for monitoring channel quality of each of arriving waves that arrive at a plurality of array antennas;
   a computing section for calculating a set of weights for elements of each of the plurality of array antennas, the set of weights being such values as to allow each of the array antennas to function as an adaptive beam forming array antenna;
   a weight setting section for selecting a particular set of weights from the calculated sets of weights, and for applying the particular set of weights in common to the plurality of array antennas, the particular set of weights being to be applied to an array antenna that has received an arriving wave with maximum channel quality as monitored by the channel quality monitoring section; and
   a combining section for combining arriving waves received with the plurality of array antennas to which the particular set of weights are applied.

2. A radio communication apparatus comprising:

   a channel quality monitoring section for monitoring channel quality of each of arriving waves that arrive at a plurality of array antennas;
   a computing section for calculating a set of weights for elements of each of the plurality of array antennas, the set of weights being such values as to allow each of the array antennas to function as an adaptive null-forming array antenna;
   a weight setting section for selecting a particular set of weights from the calculated sets of weights, and for applying the particular set of weights in common to the plurality of array antennas, the particular set of weights being to be applied to an array antenna that has received an arriving wave with maximum channel quality as monitored by the channel quality monitoring section; and
   a combining section for combining arriving waves received with the plurality of array antennas to which the particular set of weights are applied.

3. A radio communication apparatus comprising:

   a channel quality monitoring section for monitoring channel quality of each of arriving waves that arrive at a plurality of array antennas;
   a computing section for calculating arrival angles of a desired wave and of a disturbing wave as the arriving waves for each of the plurality of array antennas;
   a weight setting section for selecting arrival angles of a desired wave and of a disturbing wave from the calculated arrival angles, and for applying a particular set of weights in common to the plurality of array antennas, the desired wave and disturbing wave being arrival waves with good channel quality as monitored by the channel quality monitoring section, the particular set of weights being such values as to allow each of the plurality of array antennas to have a main lobe in a direction of the arrival angle of the desired wave, and a null point in a direction of the arrival angle of the disturbing wave; and
   a combining section for combining arriving waves received with the plurality of array antennas to which the particular set of weights are applied.

4. A radio communication apparatus comprising:

   a channel quality monitoring section for monitoring channel quality of each of arriving waves that arrive at a plurality of array antennas;
   a computing section for calculating, for each of the plurality of array antennas, arrival angles of a desired wave and of a disturbing wave as the arriving waves and a set of weights, the set of weights being such values as to allow each of the array antennas to function as an adaptive null-forming array antenna;
   a weight setting section for selecting, from the calculated arrival angles, arrival angles of a desired wave and of a disturbing wave as arrival waves with good channel quality as monitored by the channel quality monitoring section, for correcting one of the calculated sets of weights to such values as to allow an array antenna to have a main lobe in a direction of the arrival angle of the desired wave, and a null point in a direction of the arrival angle of the disturbing wave, and for applying the corrected set of weights in common to the plurality of array antennas, the array antenna having received an arriving wave with maximum channel quality as monitored by the channel quality monitoring section; and
   a combining section for combining arriving waves received with the plurality of array antennas to which the corrected set of weights are applied.

5. The radio communication apparatus according to claim 3 or 4, wherein:

   each of the plurality of array antennas is composed of elements; and

the elements of each of the array antennas are arranged on a same virtual line or plane parallel to each position of the plurality of array antennas.

6. The radio communication apparatus according to any of the claims 1 to 4, further comprising

feeding section(s) provided on feed line(s) of all or part of the plurality of array antennas, for employing a set of weights for transmitting a transmission wave via the feed line(s), the set of weights being obtained by correcting the particular set of weights in accordance with frequency differences between the transmission wave and the arriving waves.

7. The radio communication apparatus according to any of the claims 1 to 4, further comprising

feeding section(s) for applying the particular set of weights to feeding line(s) of transmission array antenna(s) which is/are used for transmission of a transmission wave having a different frequency from frequencies of the arriving waves, wherein

all or part of the plurality of array antennas is/are paired with the transmission array antenna(s).

8. A radio communication apparatus comprising:

a channel quality monitoring section for monitoring channel quality of each of arriving waves that arrive at a plurality of aerial beam forming antennas;

a computing section for calculating a set of reactances for elements of each of the plurality of aerial beam forming antennas, the set of reactances being loaded on each of the elements of the aerial beam forming antennas;

a reactance setting section for selecting a particular set of reactances from the calculated sets of reactances, and for applying the particular set of reactances in common to the plurality of aerial beam forming antennas, the particular set of reactances being loaded on an aerial beam forming antenna having received an arriving wave with maximum channel quality as monitored by the channel quality monitoring section; and

a combining section for combining arriving waves received with the plurality of aerial beam forming antennas on which the particular set of reactances are loaded.

9. A radio communication apparatus comprising:

a channel quality monitoring section for monitoring channel quality of each of arriving waves that arrive at a plurality of aerial beam forming antennas;

a computing section for calculating a set of reactances for elements of each of the plurality of aerial beam forming antennas, the set of reactances being loaded on each element of the aerial beam forming antennas and being such values as to allow each of the aerial beam forming antennas to function as an adaptive null-forming array antenna;

a reactance setting section for selecting a particular set of reactances from the calculated sets of reactances, and for applying the particular set of reactances in common to the plurality of aerial beam forming antennas, the particular set of reactances being loaded on an aerial beam forming antenna having received an arriving wave with maximum channel quality as monitored by the channel quality monitoring section; and

a combining section for combining arriving waves received with the plurality of aerial beam forming antennas on which the particular set of reactances are loaded.

10. A radio communication apparatus comprising:

a channel quality monitoring section for monitoring channel quality of each of arriving waves that arrive at a plurality of aerial beam forming antennas;

a computing section for calculating arrival angles of a desired wave and of a disturbing wave as the arriving waves for each of the plurality of aerial beam forming antennas;

a reactance setting section for selecting arrival angles of a desired wave and of a disturbing wave from the calculated arrival angles, and for applying a particular set of reactances in common to the plurality of aerial beam forming antennas, the desired wave and disturbing wave being arriving waves with good channel quality as monitored by the channel quality monitoring section, the particular set of reactances being such values as to allow each of the plurality of aerial beam forming antennas to have a main lobe in a direction of the arrival angle of the desired wave, and a null point in a direction of the arrival angle of the disturbing wave; and

a combining section for combining arriving waves received with the plurality of aerial beam forming antennas on which the particular set of reactances are loaded.

11. A radio communication apparatus comprising:

a channel quality monitoring section for monitoring channel quality of each of arriving waves that arrive at a plurality of aerial beam forming antennas;

a computing section for calculating, for each of the plurality of aerial beam forming antennas, arrival angles of a desired wave and of a disturbing wave and a set of reactances, the set of reactances being such values as to allow each of the aerial beam forming antennas to function as an adaptive null-forming array antenna;

a reactance setting section for selecting arrival angles of a desired wave and of a disturbing wave from the calculated arrival angles, and for correcting one of the calculated sets of reactances to such values as to allow an aerial beam forming antenna to have a main lobe in a direction of the arrival angle of the desired wave, and a null point in a direction of the arrival angle of the disturbing wave, and for applying the corrected set of reactances in common to the plurality of aerial beam forming antennas, the desired wave and disturbing waves being arriving waves with good channel quality as monitored by the channel quality monitoring section, the aerial beam forming antenna having received an arriving wave with maximum channel quality as monitored by the channel quality monitoring section; and

a combining section for combining arriving waves received with the plurality of aerial beam forming antennas on which the corrected set of reactances are loaded.

12. The radio communication apparatus according to claim 10 or 11, wherein:

each of the plurality of aerial beam forming antennas is composed of elements; and

the elements of each of the aerial beam forming antennas are arranged on a same virtual line or plane parallel to each position of the plurality of the aerial beam forming antennas.

13. The radio communication apparatus according to any of the claims 8 to 11, further comprising feeding section(s) provided on feed line(s) of all or part of the plurality of aerial beam forming antennas, for employing a set of reactances for transmitting a transmission wave via the feed line(s), the set of reactances being obtained by correcting the particular set of reactances in accordance with frequency differences between the transmission wave and the arriving waves.

14. The radio communication apparatus according to any of the claims 8 to 11, further comprising feeding section(s) for applying the particular set of reactances to feeding line(s) of transmission aerial beam forming antenna(s) which is/are used for transmission of a transmission wave having a different frequency from frequencies of the arriving waves, wherein

all or part of the plurality of aerial beam forming antennas is/are paired with the transmission aerial beam forming antenna(s).

15. A radio communication apparatus comprising:

a channel quality monitoring section for monitoring channel quality of each of arriving waves that arrive at a plurality of adaptive beam forming array antennas;

a weight setting section for selecting a particular set of weights from sets of weights which are to be loaded on the plurality of adaptive beam forming array antennas, and for applying the particular set of weights as corrected values in common to the plurality of adaptive beam forming array antennas, the particular set of weights being to be applied to an adaptive beam forming array antenna that has received an arriving wave with maximum channel quality as monitored by the channel quality monitoring section; and

a combining section for combining arriving waves received with the plurality of adaptive beam forming array antennas.

16. A radio communication apparatus comprising:

a channel quality monitoring section for monitoring channel quality of each of arriving waves that arrive at a plurality of adaptive null-forming array antennas;

a weight setting section for selecting a particular set of weights from sets of weights which are to be loaded on the plurality of adaptive null-forming array antennas, and for applying the particular set of weights as corrected values in common to the plurality of adaptive null-forming array antennas, the particular set of weights being to be applied to an adaptive null-forming array antenna that has received an arriving wave with maximum channel quality as monitored by the channel quality monitoring section; and

a combining section for combining arriving waves received with the plurality of adaptive null-forming array antennas.

17. A radio communication apparatus comprising:

a channel quality monitoring section for monitoring channel quality of each of arriving waves that arrive at a plurality of adaptive null-forming array antennas;

a computing section for calculating arrival angles of a desired wave and of a disturbing wave as the arriving waves for each of the plurality of adaptive null-forming array antennas;

a weight setting section for selecting arrival angles of a desired wave and of a disturbing wave from the calculated arrival angles, and for applying a particular set of weights as corrected values in common to the plurality of adaptive null-forming array antennas, the desired wave and disturbing wave being arrival waves with good channel quality as monitored by the channel quality monitoring section, the particular set of weights being such values as to allow each of the plurality of adaptive null-forming array antennas to have a main lobe in a direction of the arrival angle of the desired wave, and a null point in a direction of the arrival angle of the disturbing wave; and

a combining section for combining arriving waves received with the plurality of adaptive null-forming array antennas.

18. A radio communication apparatus comprising:

a channel quality monitoring section for monitoring channel quality of each of arriving waves that arrive at a plurality of adaptive null-forming array antennas;

a computing section for calculating arrival angles of a desired wave and of a disturbing wave as the arriving waves for each of the plurality of adaptive null-forming array antennas;

a weight setting section for selecting, from the calculated arrival angles, arrival angles of a desired wave and of a disturbing wave as arrival waves with good channel quality as monitored by the channel quality monitoring section, for correcting a set of weights to be applied to an adaptive null-forming antenna to such values as to allow the adaptive null-forming array antenna to have a main lobe in a direction of the arrival angle of the desired wave, and a null point in a direction of the arrival angle of the disturbing wave, and for applying the corrected set of weights in common to the plurality of adaptive null-forming array antennas, the adaptive null-forming array antenna having received an arriving wave with maximum channel quality as monitored by the channel quality monitoring section; and

a combining section for combining arriving waves received with the plurality of adaptive null-forming array antennas.

19. The radio communication apparatus according to claim 17 or 18, wherein:

each of the plurality of adaptive null-forming array antennas is composed of elements; and the elements of each of the adaptive null-forming array antennas are arranged on a same virtual line or plane parallel to each position of the plurality of adaptive null-forming antennas.

20. The radio communication apparatus according to claim 15, further comprising

feeding section(s) provided on feed line(s) of all or part of the plurality of adaptive beam forming array antennas, for employing a set of weights for transmitting a transmission wave via the feed line (s), the set of weights being obtained by correcting the particular set of weights in accordance with frequency differences between the transmission wave and the arriving waves.

21. The radio communication apparatus according to claim 16, further comprising

feeding section(s) provided on feed line(s) of all or part of the plurality of adaptive null-forming array antennas, for employing a set of weights for transmitting a transmission wave via the feed line (s), the set of weights being obtained by correcting the particular set of weights in accordance with frequency differences between the transmission wave and the arriving waves.

22. The radio communication apparatus according to claim 15, further comprising

feeding section(s) for applying the particular set of weights to feeding line(s) of transmission array antenna(s) which is/are used for transmission of a transmission wave having a different frequency from frequencies of the arriving waves, wherein

all or part of the plurality of adaptive null-forming array antennas is/are paired with the transmission array antenna(s).

EP 1 394 966 A2

# F I G. 1

EP 1 394 966 A2

# F I G. 3

FROM BRANCHING FILTER

51-11 ELEMENT

61D-11 ANTENNA DUPLEXER

TRANSMISSION WAVE SIGNAL

52-11 A／D

TRANSMISSION WAVE PROCESSING PART

61TP-11

51-1p ELEMENT

61D-1p ANTENNA DUPLEXER

52-1p A／D

TRANSMISSION WAVE PROCESSING PART

61TP-1p

COMBINATION OF WEIGHTS

TO FEED CONTROLLING PART

EP 1 394 966 A2

# F I G .  4

FIRST
ESPAR
ANTENNA

n'th
ESPAR
ANTENNA

A/D

SIGNAL PRO-
CESSING PART

A/D

SIGNAL PRO-
CESSING PART

5 6-1

5 6-n

5 8

BASE-
BAND
SIGNAL

Σ

AUXILIARY SIGNAL
PROCESSING PART

5 7

5 9

FEED CON-
TROLLING
PART

6 0

TRANSMISSION
QUALITY DE-
TERMINING
PART

# PRIOR ART
# FIG. 5

# PRIOR ART
# FIG. 6

90-1 ARRAY ANTENNA

90-n ARRAY ANTENNA

A/D

A/D

A/D

A/D

Σ

ARRIVING WAVE

WEIGHTING CONTROLLING PART

EP 1 394 966 A2